# EUROPEAN PATENT APPLICATION

(11) **EP 4 428 361 A1**
(43) Date of publication of application: **11.09.2024**
(21) Application number: 23020107.1
(22) Date of filing: 07.03.2023
(51) Int. Cl.: F03D 1/02, F03D 1/06, F03D 7/02

(54) **WIND TURBINE SYSTEM**

(71) Applicant: Podhola, Kamil, 46311 Liberec 30 (CZ)
(72) Inventor: Podhola, Kamil, 46311 Liberec 30 (CZ)

(57) **Abstract**

The invention relates to a wind turbine system (WTS) comprising at least two blade rotors rotatably mounted to a nacelle (rotatably) mounted to a tower provided above a (water) level. The WTS can be characterised in that the blade rotors are interconnected by one or more retractable blades. The retractable blades can have variable properties, they can be stowable, can be able to weathervane, and can comprise a defined construction, a working mean. The blade rotors can rotate in the same and/or opposite directions. The components can be fabricated of defined materials. The WTS can be provided in an array and it can be couplable or coupled with various mechanocomponents and/or electrocomponents. A method for varying a design point of the disclosed wind turbine is proposed.

## Description

### Technical Field

The invention relates to a wind turbine system.

### Background Art

Wind turbines can be found in many configurations, shapes and sizes, ranging from the relatively simple to the most sophisticated used in onshore and/or offshore installations, arrays, farms, etc. Wind turbines are machines that convert kinetic energy from the wind into electricity. The main parts are rotor with blades rotatably mounted to a nacelle which can contain a set of gears and a generator and which can be mounted on the top of a tower above a water level or a ground level or an artificial level such as a roof.

### Disclosure of Invention

The object of the present invention is to propose a wind turbine comprising at least two blade rotors; a nacelle, wherein the two blades rotors are rotatably mounted to the nacelle; a tower, wherein the nacelle is mounted to the tower and the tower is provided above a level. The wind turbine characterised in that said at least two blade rotors *are interconnected* by one or more retractable blades.

It is yet another object to provide the wind turbine with the retractable blades having a defined variable property.

It is yet another object to provide the wind turbine with the retractable blades being stowable.

It is yet another object to provide the wind turbine with the retractable blades being able to weathervane.

It is yet another object to provide the wind turbine with the retractable blades comprising defined constructions.

It is yet another object to provide the wind turbine with the nacelle rotatably mounted to the tower.

It is yet another object to provide the wind turbine situated above a water level.

It is yet another object to provide the wind turbine with the blade rotors configured to rotate in the same and/or opposite directions.

It is yet another object to provide the wind turbine with components fabricated of defined materials.

It is yet another object to provide the wind turbine provided in an array.

It is yet another object to provide the wind turbine couplable or coupled with a defined mechanocomponent and/or a defined electrocomponent.

Another object of the present invention is to provide a method for varying a design point of a wind turbine provided according to the present invention, the method comprising the steps of providing an initial setting of said one or more retractable blades;
measuring a wind parameter, wherein at least one said wind parameter is selected from the group consisting of wind speeds, wind directions, wind gradients, wind shears, wind shifts, inflow turbulences, wake turbulences, air densities, temperatures, atmospheric pressures, altitudes, azimuthal parameters, or combinations thereof;
providing a setting of said one or more retractable blades and/or a positioning of said nacelle according to measurements of said wind parameters,
wherein the second and the third steps can be repeated.

In a first aspect, the invention discloses a wind turbine.

In a second aspect, the invention discloses a method for varying a design point of the wind turbine.

### Brief Description of Drawings

The invention will now be described by way of example. Only essential elements of the invention are schematically shown and not to scale nor in proportions to facilitate immediate understanding, emphasis being placed upon illustrating the principles of the invention.

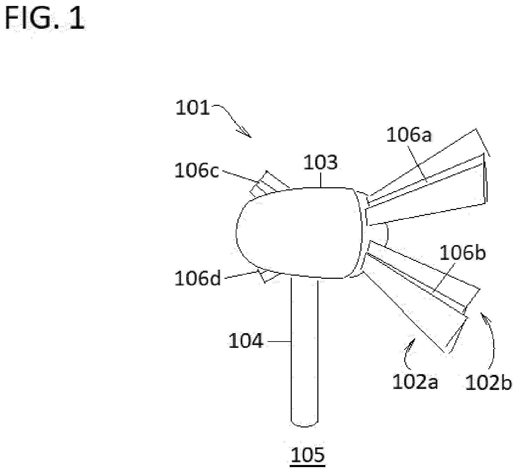

FIG. 1 is a perspective illustration of a wind turbine according to the present invention.

### Best Mode for Carrying Out the Invention

The following detailed description shows the best contemplated modes of exemplary embodiments. The description is made for the purpose of illustrating the general principles of the invention, and in such a detail that a skilled person in the art can recognise the advantages of the invention, and can be able to make and use the invention. The objects and advantages of this invention may be realized and obtained as pointed out in the appended claims. Additional advantages may be learned by practice of the invention. The detailed description is not intended to limit the principle of the presented invention, but only to show the possibilities of it and to explain the meaning and the sense of the terms used in the appended claims. The description and the detailed description are exemplary and explanatory only.

The terms used in the claims and the specifications shall refer to their synonyms as well.

As used in the claims and the specification, the singular forms are intended to include the plural forms as well and vice versa.

As used in the claims and the specification, the term "tower" shall refer to various types of constructions such as columns, pillars, steel constructions, reinforced concrete constructions, constructions with post tensioned cables, truss construction, central vertical constructions with a plateau bearing a plurality of secondary towers with nacelles, etc. The towers can be typically 50-100 meters (200-300 feet) in height or others.

As used in the claims and the specification, the term "gear device" shall refer to gears, gear boxes, planetary gears, reduction gear sets, speed reducers, differential gears, variators, etc. Various reduction ratios can be used [e.g. 5-100: 1 or others].

As used in the claims and the specification, the term "transmission mean" shall refer to belts, chains, cardans, cogwheels, bevel gears, sprockets, shafts, multisection shafts, hollow shafts, etc.

As used in the claims and the specification, the term "electricity generator" shall refer to AC generators, DC generators, motor generators, homopolar generators (disc types, drum types, combined types), etc.

As used in the claims and the specification, the term "processor" shall refer to programmable systems including microcontrollers, application specific integrated circuits (ASIC), reduced instruction set circuits (RISC), programmable logic circuits (PLC), system executing supervisory, Supervisoriy Control and Data Acquisition (SCADA) programs, etc.

The term "control" shall refer to retractable turbine blades settings, electricity generators settings, electro- or mechanocomponent settings, controlling loading of the blades, the power train, the rotation, the power production, providing an active azimuthal control, etc.

The term "to couple" and derivatives shall refer to a direct or indirect connection via another device and/or connection, such a connection can be mechanical, hydraulic, electrical, electronical, electromagnetic, pneumatic, communication, functional, etc. The connection can be temporary, permantent, detachably attachable, scalable, slotable. Any additional systems may be coupled to the elements, components, etc. and to the system of the invention.

The terms "to comprise", "to include", "to contain", "to provide" and derivatives specify the presence of an element, but do not preclude the presence or addition of one or more other elements or groups and combinations thereof.

The term "consisting of" characterises a Markush group which is by nature closed. Single members of the group are alternatively useable for the purpose of the invention. Therefore, a singular if used in the Markush group would indicate only one member of the group to be used.

For that reason are the countable members listed in the plural. That means together with qualifying language after the group "or combinations thereof that only one member of the Markush group can be chosen or any combination of the listed members in any numbers. In other words, although elements in the Markush groups may be described in the plural, the singular is contemplated as well. Furthermore, the phrase "at least one" preceding the Markush groups is to be interpreted that the group does not exclude one or more additional elements preceded by the phrase.

The invention will be described in reference to the accompanying drawings.

FIG. 1 is a perspective illustration of a wind turbine (101) comprising at least two blade rotors (102a, 102b) rotatably mounted to a nacelle (103) mounted to a tower (104) provided above a level (105). The two blade rotors (102a, 102b) can be interconnected by four retractable blades (106a, 106b, 106c, 106d).

The blade rotors (102a, 102b) can be rotated in the same and/or opposite directions and the retractable blades (106a, 106b, 106c, 106d) can thus change blade pitches, spans and/or blades areas. The wind turbine (101) can thus be put into different working regimes accordingly to the wind direction and/or speed [wind energy typically exponentially increases with the height]. The retractable blades (106a, 106b, 106c, 106d) can be stowable [e.g. they can contain a flexible material which can be wound on a spindle provided inside an aerodynamic girder, etc.].

Weathervaning function can be provided e.g. by rotating the nacelle (103) and by setting the retractable blades (106a, 106b, 106c, 106d) into a weathervaning position.

The blade rotors (102a, 102b) can be provided at both ends of the nacelle (103) (not shown) [e.g. having the same or a different (controllable or fixed) angle of attack; e.g. optionally compensating a twisting torque on the tower (104), etc.] and can be rotated in the same or opposite directions. The blade rotors can have different diameters [e.g. a set provided at a first end of the nacelle (103) different from another set provided at a second end].

The nacelle can be (optionally) rotatatable about X,Y and/or Z axes.

The retractable blades (106a, 106b, 106c, 106d) can comprise a defined construction [e.g. a sandwiched construction for example having a foam or hollow core and a shell construction; a prestressed contruction with different prestressing means such as cords, rods, layers, etc.; a construction composed of subsections - for example a girder can be composed of a plurality of dismantleable outer shells and a central spindle to wind a flexible interconneting blade material such as cloth, canvas, membrane, etc.; each construction and component can be modulalry exchangeable and scalable].

The retractable blades (106a, 106b, 106c, 106d) can comprise working means [e.g. spanning means such as cords, rods, stays, guy wires, etc.; reinforcing means such as bands, reinforced edges, etc.; winding means such as spindles, drums, shafts, etc.; guiding means such as guiding wheels, eyelets, grooves, etc.]. The defined contstructions and the working means can be combined in one construction.

The nacelle (103) can be rotatably mounted to the tower (104) [e.g. by various coupling means such as (composite, roller, ball, etc.) bearings, rollers, pivots, etc.].

The wind turbine (101) can be preferably provided above a water level (105) of any type of a body of water.

The wind turbines (101) can be provided in an array (not shown) [e.g. wind farms of various patterns not to obtrue wind access to another wind turbine, etc.].

The wind turbine (101) can be coupled with different mechanocomponents [e.g. gear devices /which can convert the shaft's high-torque low-speed motion into low-torque high-speed motion that fits the electric generator's requirements/ coupled with the blade rotors (102a, 102b); brakes /which can be designed to stop the spinning main shaft in case of high winds, maintenance, etc.; dynamic brakes can be used /e.g. electric, hydraulic, pneumatic, etc./, a gearless direct drive can also be utilized, clutches, yaw drives /which typically orient the axis of rotation of the retractable blades up or down the wind and which typically are placed inside a cabin of the nacelle on top of the tower an permitting its rotation for alignment with the wind; the nacelle can typically rotate on a turret/, transmission means and/or thermal management systems /which can thermally manage any component of the system including electrocomponents/; tail system inclusive of oscillating tails, various tail fin members, etc., can be provided as well; torque converters, joints, various types of dampers, counterweights, foundations /which can be surface mounted, (partially) buried, etc./, pumps, lifts, conveyers /the connection can be direct or indirect, electromagnetic, mechanical, pneumatic, hydraulic, etc./, potential energy devices /which can pump water to a reservoir from a lower elevation to a higher elevation during a low electricity demand period to store energy (and water) and to improve efectiveness of wind energy harvesting, etc.; hybrid energy harvesters can thus be created; the reservoirs can be placed in a proximity of the tower, under the tower, on the tower /which can eliminate vibrations during an earthquaqe etc./].

The wind turbine (101) can be coupled with different electrocomponents to harvest the wind energy [e.g. anemometers, sensors, targets, actuators, amplifiers, resonators, rectifiers, filters, inverters, converters, transformers, voltage regulators, power factor corrections, compensations, power electronics, chargers, controllers, processors, inductors, capacitors, resistors, diodes, varactors, switches, conductors, rechargeable batteries, rechargeable power sources, source management systems, loads, power transfer interfaces, power cables, input devices, electricity generators, electric motors, arrays of solar cells, hydrogen power units providing fuel cells, wind energy to electric energy converters, wave energy to electric energy converters, tidal energy to electric energy converters, water currents energy to electric energy converters, thermal energy to electric energy converters, etc.; controllers may provide proportinal and integral (PI) control in some embodiments, in others a differential term may be added (PID) control, etc.; the controller may be analog or digital; digital types can have an algorithm that correlates the power level input signals from a generator, local wind speed and direction signals from a local anemometer, a thermometer, a hygrometer, position signals from a blade sensor and other signal sources, determining optimal settings and sequences of various actuators driving the nacelle, the retractable blades or their components, etc.; the employed algorithm may also have the capability to record the operation history to make predictions for future pitch positions and other parameters; various control methods can be employed, e.g. a variable speed at a fixed pitch, a variable pitch to maintain the revolutions per minute of the rotor, etc.; this provides the wind turbine system capable of producing optimum energy output even with varying wind conditions and speeds; manual operating and control of turbine components are contemplated as well; microprocessors can be in communication with the actuators and weather sensors; the computer memory may store a control rule being constantly compared with detected weather conditions; the control rule may further predict wind speeds, conditions and dangerour gradients, turbulences, danger of icing, etc., to prevent the system from the conditions exceeding its operating limits; the weather sensor(s) may be located in a sufficient distance from the wind turbine; control algorithms can be based upon prevailing wind conditions toghether with active azimuthal control /e.g. for each azimuth or zone can be set a different control program maximizing the windflow for the turbine and minimizing the danger of the damage to its components; such the control program can take into account the parameters in the whole array of turbines, in the group of turbines, adjacent turbines, mutually influencing turbines, etc./].

Controllers may receive feedback from various operating condition sensors [e.g. rotational speed, bearing temperature, electrical potential and current, information from actuators about executed commands, etc.].

Communication interfaces [e.g. electronic, human-machine, etc.] for local and/or distant wired and/or wireless can be further provided to communicate with the controllers and/or operators, central systems, cloud/fog/edge communication is contemplated as well. All the mechano- and electrocomponents are well known in the art and connecting with them represents known constructions which does not need to be explicitly tought.

Wind turbines commonly are arrayed in wind farms wherein a single control system may be utilized. The wind turbines can be positioned to reduce or to minimize a wake effect. Optimalization programs for wind turbines in arrays can be provided adjusting wind turbines' parameters to produce an acceptable amount of turbulence induced so that (an)other (adjacent) wind turbine(s) in array can still reach an optimum power production (similarly in the case of (a) non-operational unit(s) in the array). Typically (a) downstream turbine(s) can monitor an operational status of (an) upstream turbine(s) [e.g. a rotational speed of rotor, a power output, turbine settings, the time of operationality or non-operationality, a time-out response, meteorological mast data, etc.]. By these programs various operational parameters can be set [adjusting the power production, the rotor rotation, the retractable blades settings, the nacelle positioning, etc.]. Turbine operational centers (farm centers) can be provided.

### Common requirements

Conventionally, the mass of a rotor increases as function of the diameter cubed, while the swept area only increases as a funciton of the diameter squared. The power delivered by a turbine varies at the square of the diameter. Thus there is a need to provide a lightweight construction being able to provide a substantial increase in the swept area without substantially increasing the mass of the rotor. For a given wind speed, the tip speed of a given rotor type is substantially the same regardless its diameter (i.e. the larger rotors turns more slowly than the smaller ones to obtain the same tip speed).

The retractable blades can substantially increase the swept area without substantially increase the mass. The retractable blades with retractable spanning parts can provide for rotors having variable diameters, thus delivering the same power at different torque. A larger rotor can be substitued by a multiplicity of smaller rotors sweeping an equivalent total area and having a smaller total mass. Smaller rotors rotate faster thus reducing need for ratio gearing or slow-speed alternator or generators. Low-frequency oscillations at the windturbines can be conventionally eliminated by increasing the number of blades or increasing the rotation speed of the wind turbine [seeing that unperceivable infrasound within the range from 16 Hz to 0.001 Hz (or 0 to 20 Hz range) can have dangerous effects on human especially brain functions]. The low-frequency pulsations arise at the moments of a blade passing past the tower. The retractable blade can augment the blade area so that these moments would be prolonged, thus a minimal pulse would occur. Similarly in case of the retractable blades rotating (in opposite directions) on both sides of a nacelle and ideally with different number of retractable blades, a higher frequency can be attained without an acoustic beat if the number of the retractable blades is Z and the number of the retractable blades on the opposite side is Z+1. The retractable blades can include various airfoil profiles, can have root and airfoil and transition regions. The rotor shaft can be substantially horizontal and the blades extending substantially in a radial direction. The rotor can comprise a hub (a hub extender) from which the blade extends.

The contour can comprise a pressure side (windward, upwind side) and a suction (leeward, downwind) side, a leading edge and a trailing edge [which can be between 1 nad 70% of the chord length] with a chord extending in between. Strong depression on the back side of the retractable blade profile can be produced when air is flowing through. The profiled contour can generates a lift when being impacted by an incident airflow. [The amount of lift generated on the blade can mainly depend on a speed of the wind, a blade lift coeficient, a blade planform area, an air density of the wind.] The root region can optionally be substantially circular or elliptical and the airfoil region generating lift can be disposed away from the hub after a transition region gradually changing the profile. The transitional region can extend along a defined longitudinal extent. The turbine blades can be typically designed by firstly designing the outer shape and the aerodynamic perfomance of the blade to obtain the target loading and the target axial induction. The aerodynamic shapes can be complex as well as the manufacturing process. The blades can be designed to prevent stall problems [e.g. by providing turbulence generating strips, etc.]. The shape of the blades can be changed to change an airfoil shape. The turbine blades can be provided (eventually retrofitted) with ribs, vortex generators, serrated trailing edge pannels, flaps, slats, slots, spoilers, cuffs, flow guiding devices, flow altering devices adjusting lift and inflow propertites, lift generating apparatuses defining airflow channels and leading and/or trailing edges of blades, leadig/trailing edge extensions, etc.; these constructions can be coupled with various ways [e.g. bonded, bolted, riveted, coupled by means of joints, slidably coupled, movably coupled, rotatably coupled, detachably coupled, etc.].

The retractable blades can thus be constructed from the spanning parts [e.g. radially arrayed about the hub] or spanning part portions [e.g. a distant portion radially arrayed about e.g. a proximal (root) spanning part portion] having various profiles [e.g. substantially arcuate, airfoil-shaped [inclusive of NACA airfoils, DU airfoils, MEL airfoils, flatback airfoils, flatback airfoils with extension portions, covering members variously shaped, airfoils with a trailing edge thickness ratio more than 5%, blades with a blade thickness between 35-50%, airfoils with deformable trailing edge sections, dummy edge sections, etc.], circular cross-sectional, V-shaped, curvilinear, combined, spring-loaded airfoils, etc.; and which can have a rigid central part, be of sandwiched constructions, hollow constructions, shell constructions, layered constructions, constructions with cavities, etc.; spanning parts can be tubularly arranged, translateably /e.g.slidably/ arranged, telescopic, umbrella like arranged optionally with an axial leader, rigidly or rotatably fixed to spindles, etc.; the rotation /or another/ movement can be passive or active /e.g. with an electro, or elecro-mechanical mechanism/] and from the connecting parts which can be conceived as leading or trailing edge blade extensions coupled to the blades and defining a first and a second airflow channels (e.g. windward, leeward). The connecting parts can provide resilient areas exposed to wind pressure and suction. The connecting parts can be coupled to or near the respective leading or trailing edges, to or near the apex, or in other places. The connecting parts can be provided from semi-rigid (semi-flexible) membranes which can be wound round one or more spanning parts [the wound up membranes can form a scroll which can provide aerodynamical properties for wind suction and/or pressrue like an airfoil, a scoop, etc.; the winding up does not necessarily need to be "tight"; various lockup mechanisms can be provided to secure the wound up parts]. The connecting parts can be layered, connecting respective leading edges and trailing edges of the spanning parts [e.g. while being guided by spanning means such as spaning cords, axial leaders /which can be rigid constructions/ etc.]. The spanning parts can have the flow guiding devices, etc., to reduce airflow separation that may occur along a suction surface of the retractable blade. The connecting parts can be partially transparent, provided with printing, advertising, inserted vents, etc.

The retractable blades and its components can be coupled with a hub by various types of couplings [e.g. joints, bearings, struts, etc.] with various degrees of freedom enabling rotational and/or translational movements of spanning parts and/or the whole of the retractable blade. The components can be modularly constructed (modularly scalable, exchangeable, catalogued, reusing an existing construction, using linear varying modules, etc.).

The fluid turbines can be provided in a flow of air or water.

Various fabrication techniques can be used such as pultrusion, extrusion, (pre-) bending, moulding, drilling, milling, cutting, bonding, etc. Blades can be optimised so as a power coefficient of the wind turbine blade is maximum for a design wind speed and a design rotor speed.

Traditionally, each section of the blade can have a local design tip speed ratio defined as the design rotor speed multiplied by the local blade section radius divided by the design wind speed. The design point can be variably changed by the invention. At each design point, the local blade section can have a local chord, twist and airfoil shape, which at the local inflow results in a design lift coefficient. The design of the proposed turbine can combine designs of the retractable blades portions [e.g. the interconnecting material and the spanning elements (rods) which can have various profiles, shapes and forms; changing profiles; can have constant or varying ratio between the thickness and the chord along the longitudinal extent; constant or varying chord length, thickness, etc.; root/transition/airfoil regions, etc., the rods can be straight, curved, twisted, tapered, etc.]. The blade pitch angle and and the generator torque can be used to adjust the axial-induction to the (aerodynamic /near-/ optimum) target axial induction factor at the design point. The retractable blade area, the twist angle, the chord angle can vary. For design purposes, each retractable blade can be divided into a plurality of sections, each having a sectional airfoil shape, flow altering devices (e.g. to vary the shift angle), optimum angle of attack, twist, etc.

The proposed variable retractable blade novel profile has a relationship between lift coefficient and angle of attack different from conventional blade pofiles, mainly because the blade area is increasing longitudinally without substantially adding up a weight due to the construction of the (flexible) connecting part between the spanning bearing parts (rods); such an inventive concept gives more torque because the blade tip region of the retractable blade has a maximized blade area with a maximal swept annular area encountering the passing wind which determines the power that can be harvested by the wind generator.

The lift can be generally increased by increasing the planform area of the blades. However, conventionally larger blades can be more expensive. The proposed system of retractable blades can increase the planform area with minimum costs and without a greater weight. The proposed design can overcome low efficiency rates due to standard design that are employed in environments not suitable for the particular wind turbine design or initial set-up.

An additional technique for increasing lift is to pitch the blades such that an angle of attack is increased. Increasing a pitch angle of the retractable blade decreases an amount of blade surface area exposed to wind. The proposed system provides a pitch angle adjustment about a pitch axis at each retractable blade. Each retractable blade can be controlled by a pitch assembly (which can include a pitch drive motor) which can be housed in the nacelle, in the hub, etc. The retractable blades can be controlled individually or as a group. The control system can issue various commands [e.g. to put the retractable blades into a start-up position, retracted position, fully deployed position, pitch changing movements, swift changing movements, etc.].

Moreover, the proposed system can work in an impulsion mode providing a large component for the torque (even if stall occurs), thus the proposed system can fluently pass from an upwind mode to a downwind mode (meant in a term of a sail of the sailing ship) without a lost of torque.

The proposed system can work in the upwind mode or in the downwind mode [the upwind and donwwind is meant in the relation with the position of the nacelle but also in the setting the angle of attack of the retractable blades to the apparent wind], in a reaction mode and/or in an impulsion mode [a hybrid mode is contemplated as well].

The tension between the connecting parts and the spanning parts can be varied [thus changing the position and the difference between the camber line and the chord line defined between leading and trailing edges] together with the position of the spanning parts which can also be crossed [e.g. to rotate in an opposite direction, or to react on a wind parameters change, etc.] and eventually the orientation of the nacelle, thus retractable blades parameters and the output parameters can be varied.

The connecting parts can be provided at independently radially and/or axially mutually movable hubs (and or can be movably, tiltably, slidably, rotatably, articulately secured by means of axles, etc. coupled to respective hubs) which can vary the orientation of the retractable blade and/or its pitch angle and which can be used in constant adjusting the blade angle to give the blades the optimal angle into the apparent wind, for obtaining a desired relationship between lift coeficient and angle of attack, and for changing between the upwind and the downwind mode.

The retractable blade can have inherently lower pitch near tip and higher pitch near root. The inner blade section can be designed to enter stall for a greater angle of attack than the outer blade section. As the inner blade section can enter stall at a greater angle of attack (e.g. at a higher wind speed) than the outer blade section, accordingly as wind speed increases for the blade proportionally more power can be produced by the inner blade section. This can provide for a reduction in the blade root moments during operation.

It can be more efficient to produce power from the outer blade section (i.e. due to their greater swept area), as wind speed increases beyond nominal output power production of a wind turbine the blade efficiency reduces in imporance and focus is directed towards reducing the blade moments. The retractable blade can offer such possibilities to reduce these moments and can further offer a possibility to react and withstand strong gust of winds in extreme weather by fully retracting and minimizing the blade area.

Costs can be saved by the proposed principle of the retractable blades wherein the blades does not need to be designed to withstand extreme wind conditions which traditionally can result in extremely strong wind blades which increases the weight of the blades resulting in heavier total head mass for the turbine systems and into the higher production costs.

As the diameter of a wind turbine increases, the tip speed ratio will increase accordingly. The increase of tip speed ratio can result in the decrease of turbine efficiency. To reduce the tip speed ratio, it can be conventionally necessary to increase the number of blades in order to lower the operating rpm of the turbine which can increase the massiveness and weight. The proposed retractable blade with increased tip area can provide another solution to the problem.

The retractable connecting part [which can be typically fabricated from a lightweight material like for modern flexible sails such as Dacron, Tetoron, Terylene, Trevira, Diolen, Kevlar, Twaron, or other fiber and/or foil type materials inclusive of metallic foils, composite materials, reinforced foils /e.g. fiberglass aluminium foil/, etc.; plastic or rubber can be used, various polymers, natural materials, etc.; and/or which can be provided by various techniques such as vulcanisation, gluing, molding, drilling, milling, cutting on various sections; and/or which can be provided with non-flexible sections and flexible connections /e.g. elastic joints of highly resilient material, various mounting and interconnecting elements, etc./; and/or fluid (or gas) systems with pipes, cavities, interconnected elements, etc.; and/or internal parts couvered with flexible outer layer to ensure a smooth outer surface and improve the weather resistance; and/or layered materials, sandwiched materials, foamed materials; various shapes and forms can be provided like for example accordion, slats, grooves, (deformable) cavities structures, (deformable) hollow structures, structures with partitions; complex fabrication techniques like repeated moulding, heating, material state changes, etc., to variable structures, flexible structures, elastic structures, etc.] will not substantially add to the mass of the retractable blade and will not substantially increase the centrifugal forces and their possible detrimental effects on the system.

The tips of the retractable blade may have close to a zero degree pitch angle, but this section of the blade generates a great deal of lift. The proposed retractable blade can have twist relatively high (as much as 20 degrees) at the inboard part since the resulting inflow velocity at the rotor design point changes relatively much in the radial direction of the retractable blade in this region, whereas the twist can be relatively small in the outboard past of the retractable blade near the blade tip, since the resulting inflow velocity at the rotor design point in this region changes slower in the radial direction. The design of the retractable blade can cope easily with this nonlinearity of twist. In contrast with standard moulded blades which require quite complex design of mould parts, the proposed retractable blade can be provided by comparatively much cheaper production methods without the need for trade-off between an ideal twist and a linearly dependent twist or a reduced twist accompanied with e.g. flow controlling and/or altering devices. Modularity can be also easily achieved.

The relative speed and hence the relative direction between the retractable turbine blade and the wind varies along the length of the retractable blade from the root to the tip. The retractable blade therefore must have a twist to achieve the optimum angle of attack of the rotating retractable blade. The twist is necessary because the pitch of the retractable blade must be adapted at every one of the points of its length not only to the wind velocity, but also to the circumferential speed of the retractable blade at each point; otherwise parts of the retractable blade would tend to accelerate while the others to slow the rotation; flow guiding (altering) devices (active, passive) can be added to various parts of the retractable blade to adapt that portion exactly to the conditions prevailing at one point of the retractable blade and/or the twist can be easily regulated by the retractable blade by changing the parameters of the spanning parts and the connecting parts [e.g. their adjustment, position, length, area, spanning force, etc.]; the regulation can be confined only to parts [e.g. distal parts] of the retractable blades whereas other parts [e.g. a central part, a proximal part, etc.] can be rigid and having a fixed most favorable angle of incidence for a given wind velocity [e.g. corresponding to a wind power class] or given regime [e.g. to obtain a maximum starting torque in for example the region which is nearest to the hub].

The retractable blades parts, i.e. the spanning parts, can be positioned [e.g. relatively rotated] in opposite directions thus changing pitch, blade area, and even the direction of rotation of the whole of the retractable blade which can be utilized during wind speed and/or velocity changes, wind gusts, slowing down (braking) the rotor during critical wind speeds or gusts, etc. The working conditions can thus be adapted for a datum wind velocity. The retractable blades area can be effectively maximized for low average wind speed areas where conventional generators generate only a fraction of their nameplate rating when used in these areas. And on the other hand, the proposed design allows to minimize the retractable blade area in case of an inclement weather which can place a very high loading on the structures of a wind turbine.

The traditional approach is to design a wind turbine that will survive by selecting very rigid and strong components or foldable blades have been proposed. The retractable blade is another approach to the problem which does not result in expensive, difficult to transport, heavy and bulky structures inefficient at low wind speeds.

The displaceable area of the retractable blades can be limited to a portion of its length. Levers, springs, hydraulic (screw jacks, pistons, etc.), electrical or other (antagonistic) actuators types can be used to position, wound, turn, incline, shift, etc., the displaceable portion(s) of the retractable blade, various effectors can be further used.

Various sensing means can be used [weather sensors such as wind profilers, Doppler radars, radars, laser radars, sonars, weather satellites, or any others which can be operated by weather forecasting or reporting service, wind direction and pressures sensors, hall effect sensors, blade position sensors, yaw sensors, rotation speed sensors, mechanical yielding control areas, etc.].

High wind and no wind positions, interim positions can be provided.

The retractable blade can have a chord length distribution linearly dependent on the local radius of the blade [similarly thickness and pre-bend].

The retractable blade can be designed with or without double curvature pressure sides.

The retractable blades can be fabricated (or work) without the connecting part, thus only composed from spanning parts. These parts can form portions of airfoils; by a mutual relative movement (setting) various types of airfoils, blade parameteres (such as angle of attack, etc.) can be provided inclusive of airoils having (partially) negative camber. The use of profiles having the negative camber may compensate for lower twist of the retractable blade. Cross-sectional profile may be adapted to compensate for a non-ideal twist nad/or chordal length.

Shaping means can be added to shape the connecting part.

The flow altering and/or guiding devices can be provided at the bearing parts and/or at the connecting parts [e.g. flaps, slats, throughflow openings, translational means, rotational means, adjustable means, surface mounted elements; boundary layer control means such as holes, slots, ventilation, vortex generators, Gurney flaps, etc.].

Split blades or dividable blades can be provided.

The connecting parts can be provided in retractable [e.g. stowable, windable, slidable, etc.] portions [e.g. outer blade sections can be independently retracted to reduce root moments, etc.]

The connecting parts can be provided with spanning structures such as ropes, bands, straps, etc. Such structures can reach beyond one or both ends, thus enabling to open a leech of the respective connecting part to an outflow at a trailing edge (rod) thus reducing drag.

The bearing parts can have a substantially circular or elliptical profile which can be advantageous in the fabrication.

Lengths of the retractable blades can be relatively short or can be 30 (99 feet) or more meters (e.g. 120) (394 ft).

The retractable blades can comprise shell structures made of a composite material [e.g. a resing matrix reinforced with fibres; e.g. polyester, vinylester or epoxy thermosetting resin, or thermoplastic resin such as nylon, PVC, ABS, polypropylene or polyethylene; or resin can be cyclic PBT or PET; fibres can be of glass, carbon, carbon-carbon, metal, basalt, etc.; reinforced resin with a polycarbonate clear coat; core can be hollow with ribs and core materials of sandwich structures can be foamed polymer or balsawood, etc.; plurality of sections and/or layers can be provided].

Deformable parts of the retractable blades can be of polymers [e.g. rubber, natural rubber, polypropylene, polyethylene, nylon, elastomers, Kevlar, etc.].

The connecting part can longitudinally extend to various portions of the entire retractable blade length. This extend can also be variable [e.g. connecting bands can variably overlap].

Airfoil profiles are usually characterised by: the chord length, the maximum camber, the position of the maximum camber, the maximum airfoil thickness, the position of the maximum thickness and a nose radius. These parameters can be provided by the bearing parts and/or by the connecting part.

The driving torque together with the rotational velocity provides the overall rotor power. Integrating the local thrust over the entire length of the blade yields the total rotor thrust. The rotor design can be a compromise between aerodynamic performance and overall wind turbine design loads. The blade can be designed for minimum cost of energy (COE) finding an optimum trade-off between energy yield and turbine loads.

The retractable blades can be pre-bended (pre-deflected) mainly to prevent the blade from hitting the tower when the blade can be deflected during operation. Pre-designed airfoil sections can be used as a design method. The rotor design targed point can be tracked by varying either blade (portions) pitch and/or rotor speed. The invention enables to track most effectively by varying further parametes of the retractable blades (i.e. blade span, blade area, blade twist, blade shape, where the retractable blades can be 3D shaped for each individual wind speed, direction, gradient, etc.; various 3D modelled profiles can be used for the spanning parts to help to find the optimum desing parameters; the 3D (or 2D) modelled spanning parts can be slidably, tiltably, rotatably, etc., mounted so as to be able to change leading and/or trailing edge shape which can change parameters such as blade twist).

The blade pitch is typically kept constant during power optimization and then can increase with wind speed during power control. Stall control methods can be further employed to prevent premature stall on the blades leading to unnecessary noise and power loss. The proposed wind trubine can be designed independently for more design target points which are characterised by the corresponding design tip speed ratio between the tip speed and the wind speed, thus more maximum power coefficients can be obtained.

The rotor design point can be seen as an individual target for each cross-section of the retractable blade (the local section design target point). When the rotor design point is (are) determined, number of blades can be chosen. Tangential and normal forces can be calculated when knowing the local chord and local twist as wel as the airfoil section force coefficients versus the local angle of attack and using the blade element momentum method (BEM) to solve the equilibrium between the overall gross flow through the rotor annulus and the local forces on the retractable blades. When the number of blades are chosen and the design tip speed ratio, the ideal rotor loading defined as the chord length multiplied by the lift coeficien and the inflow angle can be found versus radius. On basis of the ideal rotor loading, the target loading may be decided taking into account loads and practical limitations.

The blade pitch and rotational speed can be adjusted so that an outboard part of the blade meets the target loading at the rotor design point. Flow altering devices or retractable blade shape can be brought into action to change design parameters. The pitch of the retractable blades and the rotational speed of the rotor can be adjusted to meet the target axial induction factor on the midboard section, whereas the inboard (and possibly outboard) part can be provided with flow altering devices. For each individual retractable blade section can be set an airfoil profile and then knowing the flow angle the blade twist can be decided upon. This can be chosen so that the retractable blade lift-to-drag ratio can be optimal to maximize the rotor power coeficient. The retractable blade operating lift coeficient can be appoched to a design lift coefficient by changing blade parameters and the chord can be derived from the target loading.

The proposed retractable blade can provide for a lower thickness, whereas higher thickness favours traditionally the blade structure at the expense of degeneration of the airfoil lift-drag ratio.

The spanning parts can be coupled by various types of couplings with different degrees of freedom.

The root region is the interface from the blade to the blade bearing, joint, coupling, etc., and the hub. A circular flange can be one option. The root region is designed mainly structuraly. The airfoil region is designed principally from aerodynamic reasons. The tip regions are designed for noise and load concerns. The retractable blades concept proposes transformable blades having simplified base parts. Each local section can have an operational lift coefficient and an operational drag coefficient. The resultant aerodynamic forces may be divided into a tangential force oriented in the rotational plane and a normal force (a loading, a thrust) oriented normally to the rotor plane. For a given local chord length, the target axial induction factor and the target normal load can be met at a local twist angle equal to a target twist.

Flow altering means (aero-devices) can be used to tune the retractable blade, e.g. to change induction factor (inflow conditions) and normal load to target values [e.g. ventilation holes to (re-)energise the boundary layer, a pulsating flow jets /such as holes with membranes/, flaps, slots, surface mounted elements, (vane) vortex generators, spoilers, etc.; tangential blowing can be used /e.g. the connecting part can be provided with a device /a vent/ blowing air substantially tangentially to the surface of the blade to energise and reenergise the boundary layer, consequently the lift coefficient becomes larger; consequently the maximum lift coefficient can be found at a slightly higher inflow angle, and on the contrary for an off-tangential (e.g. normal) angle].

An electricity generator can also be housed in the nacelle which can further include low and high speed shafts, a gearbox (e.g. having a dual path geometry); a direct coupling of the rotor shaft to the generator is possible as well. The nacelle can include the yaw drive mechanism [which can include yaw drives, yaw motors, yaw bearings, struts, yaw error regulators, etc.], a meteorological mast with a wind vane and anemometer providing information to a control system including one or more controllers or processors to execute control alorithms.

The nacelle can include forward and aft rotor shaft support bearing, and other component known in the art. The position of the nacelle, of the rotor hub and the retractable blades with respect to the tower should take into account all working positions of the retractable blades, "coning" of the blades during the rotation, etc.

Wind turbine output can be expressed by a known formula counting with air density, wind speed, blade efficiency, conversion efficiency and square of the blade diameter wherein the blade efficiency can be calculated upon a maximum theoretical efficiency; Betz's limit=0.593; Betz does not take into account the mass-energy exchange with ambient air turbine air flow /see Tikkhonova's diagram based on the assumption that the action of the air flow on the turbine leads to air ejection caused by air streams flowing round the turbine and resulting in reducing air pressure downstream which presumtion can be used in designing blade parameters; the system with adjacent blade rotors can be set so that downstream rotors can be influenced by upstream rotors. Rotation angle sensors, wind speed measurement systems, weather sensors, etc., can be employed to control the system. As the airflow runs through an upstream rotor part of the flow is slowing down; the main air flow passes the active working parts of the rotor and is then ejected to the main stream; the mixed flow rate is less than the speed of the main streem. The velocity vector of the sum of two passing by streams will be directed towards the mixed flow with lower speed. The main flow can exponentially transmit kinetic energy to the turbine as long as the turbine flow rate becomes equal to the speed of the main stream/; an influence of swirl of a wake and presence of air resistance actually lead to up to 0.5 achieved efficiencies; the blade efficiency refers to an efficiency of converting the kinetic energy in the wind to the rotation energy of the blade and the conversion efficiency refers to an efficiency of transmitting the rotation energy of the rotor to the generator and generating power.

Electricity generators can for example have an output of electrical power connected to the electrical grid through an electrical engagement system which can take the generator off line when the rotor stopped or not generating adequate power and which can synchronize the both systems.

Other control methods can be employed avoiding a complete shut down [e.g. using predefined sector control strategies based on expected wind loads and nominal wind loads /design loads which may be based on measured data concerning wind speeds, directions, turbulences, etc./, the method combined with other parameters such as tower deflection, retractable blades deflection, given power output at a wind speed, etc.].

Rotor blade pitch control can be combined with rotor speed control [e.g. tip speed ratio control; for example predefined pitch modes /load operation modes/ can be used in part load operations and power modes /power operation modes being more or less than the rated power mode/ can be used in full load operation; for each chosen sector around the wind turbine can be set a different operation control strategy before the turbine is put into operation; thus as known in the art in sectors with a high expected wind load, the wind turbine can under-produce power to reduce loads on the turbine and the contrary in the sectors iwth a low expected wind load; direction monitoring sensors can provide information to a controller in which sector the wind turbine is facing, the controller can thus provide specific settings by consulting a look up table containing data how to regulate the power output and/or pitch angles; particular cut in wind speed can be defined for each sector differently /e.g. depending on expected turbulence/; each time of day or year can have a specific control strategy], setting a power reference about a power set point in a converter, generator power control (inclusive of the generator provided resistance control), etc.

Combining algorithms can be provided making choice of various control possibilities and system setting combinations [e.g. combinations of a power output and a rotational speed with different loads] to be selected to achieve an optimal setting including optimal power production control, with safety and design requirements on the individual components of the system and the overall loading of the wind turbine. The wind turbines typically operate under partial loads conditions until the rated wind speed is reached when the nominal generator power is reached. The turbines can be controlled to produce more or less than nominal power in both the full load and the part load regions.

No limitations are intended others than as described in the claims. The present invention is not limited to the described exemplary embodiments. It should be noted that various modifications of the outer turbine can be made without departing from the scope of the invention as defined by the claims.

Elements, integers or components having known equivalents thereof are herein incorporated as if individually set forth.

The material components, materials, chemical substances and compounds, etc., desribed in this specification reflect the state of knowledge at the time of the filling of this application and may be developed in the future.

### Industrial Applicability

The present invention can be used for a large number of applications to exchange kinetic energy with a working fluid or gaz mainly to produce electric energy. The invention propose a turbine with centripetal blades and a smooth outer circumferential surface, the turbine with presumed high efficiency, the turbine with relatively small diameter for small applications. The turbine can be coupled with power plants, vehicles, vessels, models, toys, etc.

## Claims

1. A wind turbine, comprising: at least two blade rotors; a nacelle, wherein said two blades rotors are rotatably mounted to said nacelle; a tower, wherein said nacelle is mounted to said tower and said tower is provided above a level, said wind turbine **characterised in that** said at least two blade rotors are interconnected by one or more retractable blades.

2. The wind turbine according to claim 1, wherein at least one said retractable blade has a variable property, wherein at least one said property is selected from the group consisting of variable pitches, variable spans, variable blade areas, downwind modes, upwind modes, or combinations thereof.

3. The wind turbine according to claim 1, wherein at least one said retractable blade is stowable.

4. The wind turbine according to claim 1, wherein at least one said retractable blade is able to weathervane.

5. The wind turbine according to claim 1, wherein at least one said retractable blade comprises a defined construction, wherein at least one said defined contstruction is selected from the group consisting of sandwiched constructions, constructions with hollow spaces, prestressed constructions, constructions composed of subsections, dismantleable constructions, modular constructions, or combinations thereof.

6. The wind turbine according to claim 1, wherein said at least one said retractable blade comprises a working mean, wherein at least one said working mean is selected from the group consisting of spanning means, reinforcing means, winding means, guiding means, shaping means, or combinations thereof.
+-

7. The wind turbine according to claim 1, wherein said nacelle is rotatably mounted to said tower.

8. The wind turbine according to claim 1, wherein said level is a water level.

9. The wind turbine according to claim 1, wherein said blade rotors are configured to be able to rotate in the same and/or opposite directions.

10. The wind turbine according to claim 1, wherein at least one component is fabricated of a material, wherein at least one said material is selected from the group consisting of metals, metal alloys, superalloys, polymers, carbon materials, polyester materials, epoxy materials, ceramic, glass, fiber materials, wood materials, wood compounds, nanomaterials, binders, heat resistant materials, water resistant materials, solvent resistant materials, chemically resistant materials, layered materials, radiation resistant materials, painted materials, or combinations thereof.

11. The wind turbine according to claim 1, provided in an array.

12. The wind turbine according to claim 1, wherein said wind turbine is couplable or coupled with a mechanocomponent, wherein at least one said mechanocomponent is selected from the group consisting of gear devices, brakes, clutches, yaw drives, transmission means, thermal management systems, tail structures, torque converters, joints, dampers, counterweights, foundations, pumps, valves, vanes, lifts, conveyers, potential energy devices, or combinations thereof.

13. The outer turbine according to claim 1, wherein said wind turbine is couplable or coupled with an electrocomponent, wherein at least one said electrocomponent is selected from the group consisting of anemometers, sensors, targets, actuators, amplifiers, resonators, rectifiers, filters, inverters, converters, transformers, voltage regulators, power factor corrections, compensations, power electronics, chargers, controllers, processors, inductors, capacitors, resistors, diodes, varactors, switches, conductors, rechargeable batteries, rechargeable power sources, source management systems, loads, power transfer interfaces, power cables, input devices, electricity generators, electric motors, arrays of solar cells, hydrogen power units providing fuel cells, wind energy to electric energy converters, wave energy to electric energy converters, tidal energy to electric energy converters, water currents energy to electric energy converters, thermal energy to electric energy converters, or combinations thereof.

14. A method for varying a design point of a wind turbine comprising at least two blade rotors, and a nacelle, wherein said two blades rotors are rotatably mounted to said nacelle, and further comprising a tower, wherein said nacelle is mounted to said tower and said tower is provided above a level, said wind turbine **characterised in that** said at least two blade rotors are interconnected by one or more retractable blades, the method comprising the steps of:
- providing an initial setting of said one or more retractable blades;
- measuring a wind parameter, wherein at least one said wind parameter is selected from the group consisting of wind speeds, wind directions, wind gradients, wind shears, wind shifts, inflow turbulences, wake turbulences, air densities, temperatures, atmospheric pressures, altitudes, azimuthal parameters, or combinations thereof;
- providing a setting of said one or more retractable blades and/or a positioning of said nacelle according to measurements of said wind parameters,
wherein the second and the third steps can be repeated.
